(19) **Europäisches Patentamt / European Patent Office / Office européen des brevets**

(11) **EP 2 960 447 B1**

(12) **EUROPEAN PATENT SPECIFICATION**

(45) Date of publication and mention of the grant of the patent:
**12.12.2018 Bulletin 2018/50**

(21) Application number: **14753887.0**

(22) Date of filing: **18.02.2014**

(51) Int Cl.:
*F01N 3/023* (2006.01)    *F01N 3/00* (2006.01)
*G01N 15/06* (2006.01)    *G01N 27/22* (2006.01)
*F01N 9/00* (2006.01)    *F01N 11/00* (2006.01)
*F01N 13/00* (2010.01)    *G01N 15/00* (2006.01)

(86) International application number:
**PCT/JP2014/053736**

(87) International publication number:
**WO 2014/129448 (28.08.2014 Gazette 2014/35)**

(54) **DEVICE FOR MEASURING PARTICULATE SUBSTANCE**

VORRICHTUNG ZUR MESSUNG EINER PARTIKELSUBSTANZ

DISPOSITIF DE MESURE D'UNE SUBSTANCE PARTICULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.02.2013   JP 2013031172**

(43) Date of publication of application:
**30.12.2015   Bulletin 2015/53**

(73) Proprietor: **Isuzu Motors Limited Tokyo 140-8722 (JP)**

(72) Inventors:
• **UCHIYAMA Tadashi**
  **Fujisawa-shi**
  **Kanagawa 252-0881 (JP)**
• **ASO Mitsuhiro**
  **Fujisawa-shi**
  **Kanagawa 252-0881 (JP)**

• **NODA Masafumi**
  **Fujisawa-shi**
  **Kanagawa 252-0881 (JP)**

(74) Representative: **Schaumburg und Partner Patentanwälte mbB**
**Postfach 86 07 48**
**81634 München (DE)**

(56) References cited:
**WO-A1-2007/066462    WO-A1-2011/114444**
**JP-A- H0 681 629    JP-A- 2000 321 229**
**JP-A- 2003 535 255    JP-A- 2006 000 817**
**JP-A- 2008 039 508    JP-A- 2008 139 294**
**JP-A- 2012 237 228    JP-A- 2012 241 643**
**US-A1- 2008 105 567    US-A1- 2008 229 931**
**US-A1- 2011 225 954**

## Description

### TECHNICAL FIELD

The present invention relates to a device for measuring particulate substance or matter and, in particular, relates to a device (electrostatic capacity DPF-PM sensor) for measuring particulate matter in an exhaust gas emitted from an internal combustion engine.

### BACKGROUND ART

A diesel particulate filter (hereinafter referred to as "DPF"), for example, is known as a filter for collecting particulate matter (hereinafter referred to as "PM") in an exhaust gas emitted from a diesel engine. Typically, the DPF includes a number of cells that form lattice-patterned exhaust flow channels defined by partition walls of porous ceramics, and these cells are plugged alternatingly at an upstream side and a downstream side.

The DPF can only collect a limited amount of PM. Thus, upon the amount of accumulated PM reaching a predetermined amount, so-called forced regeneration for burning and removing the accumulated PM needs to be carried out. Therefore, it is desirable to precisely measure the amount of accumulated PM in order to control the forced regeneration.

For example, PATENT LITERATURE 1 discloses a device for measuring particulate matter according to the preamble of claim 1, in particular a PM sensor that detects an amount of accumulated PM on the basis of an electrostatic capacity (capacitance) of a capacitor formed by a pair of electrodes. The paired electrodes are disposed in a corresponding pair of cells that oppose each other with a measurement cell interposed therebetween. The measurement cell is plugged at its downstream end of the exhaust passage.

### LISTING OF REFERENCES

PATENT LITERATURE 1: Japanese Patent Application Laid-Open Publication (Kokai) No. 2012-241643

Document US 2008/229931 A1 discloses a device for measuring particulate matter including a honeycomb structure which has a plurality of cells functioning as gas passages and partitioned and formed by porous partition walls. The honeycomb structure has two or more electrodes therein.

Document US 2011/225954 A1 discloses a sensor for an exhaust gas purifying apparatus including an examining filter. The examining filter is provided in a secondary exhaust line diverging from a primary exhaust line of an internal combustion engine.

Document US 2008/105567 A1 discloses a sensing device for direct measurement of a concentration of PM concentration contained in exhaust gas. The sensing device includes an electrode unit fitted in the exhaust pipe and composed of a pair of parallel flat plates and a sensing unit for measuring electrical characteristics of the electrode unit. In order to remove PM adhering to the electrode unit, a power supply unit provides power supply to the electrode unit.

### SUMMARY OF THE INVENTION

### PROBLEMS TO BE SOLVED BY THE INVENTION

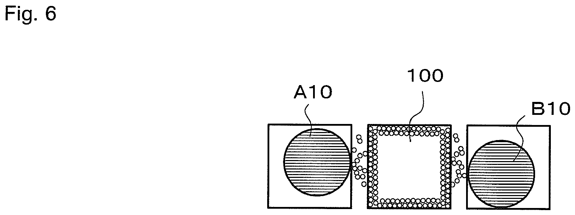

With the above-mentioned conventional PM sensor, it is difficult for the electrodes disposed in the cells to maintain their linear shapes (linearity). Thus, the outer peripheries of the electrodes partially come into contact with the surfaces of the partition walls of the cells. Typically, the electrode is made only from a conductive metal material. Thus, as illustrated in Fig. 6 of the accompanying drawings, a problem arises, i.e., when conductive PM accumulates in a substantially rectangular shape on the surfaces of the partition walls of a measurement cell 100 and is also collected (retained) in the partition walls, a pair of electrodes A10 and B10 are coupled to each other through the conductive PM and short-circuit to each other.

The present invention has been made in view of such a problem, and an object of the present invention is to effectively prevent short-circuiting between electrodes that could occur due to PM accumulation.

### SOLUTION TO OVERCOME THE PROBLEMS

To achieve the above-mentioned object, a device for measuring particulate matter according to claim 1 is provided.

The insulating layer may be made from a ceramic material or a glass material.

The filter may be disposed in the exhaust passage with the unplugged side of the measurement cell facing toward the upstream side.

The device for measuring particulate matter may further include a bypass passage that branches off from the exhaust passage at a predetermined position, and a second filter that is provided in the exhaust passage at a position downstream of the predetermined position (branching position of the bypass passage) and that collects particulate matter in the exhaust gas flowing through the exhaust passage downstream of the predetermined position. The filter may be disposed in the bypass passage.

When forced regeneration for burning and removing particulate matter that has accumulated in the filter is executed, the electrodes may function as a heater.

### ADVANTAGES OF THE INVENTION

According to the device for measuring particulate matter according to the present invention, short-circuiting between electrodes that could occur due to PM accumulation can effectively be prevented. Furthermore, corrosion of the electrodes is prevented, and therefore a relatively inexpensive material can be used for the electrodes.

BRIEF DESCRIPTION OF THE DRAWINGS

Fig. 1 is an overall configuration diagram schematically illustrating a device for measuring particulate matter according to an embodiment of the present invention.

Figs. 2a and 2b are a set of views showing a DPF of the particulate matter measuring device according to the embodiment of the present invention. Specifically, Fig. 2a is a schematic perspective view of the DPF as viewed from the downstream side of the exhaust passage, and Fig. 2b is a schematic plan view of part of the DPF as viewed from the downstream side of the exhaust passage.

Fig. 3 is a schematic longitudinal cross-sectional view of a pair of electrodes used in the particulate matter measuring device according to the embodiment of the present invention.

Fig. 4 is a schematic longitudinal cross-sectional view of measurement cells and accumulated PM in the particulate matter measuring device according to the embodiment of the present invention when PM has accumulated on the surfaces of partition walls of the measurement cells and is also collected (retained) in the partition walls.

Fig. 5 is an overall configuration diagram schematically illustrating a device for measuring particulate matter according to another embodiment of the present invention.

Fig. 6 is a schematic longitudinal cross-sectional view of a measurement cell and accumulated PM in a conventional PM sensor when PM has accumulated on the surfaces of partition walls of the measurement cell and is also collected in the partition walls.

MODE FOR CARRYING OUT THE INVENTION

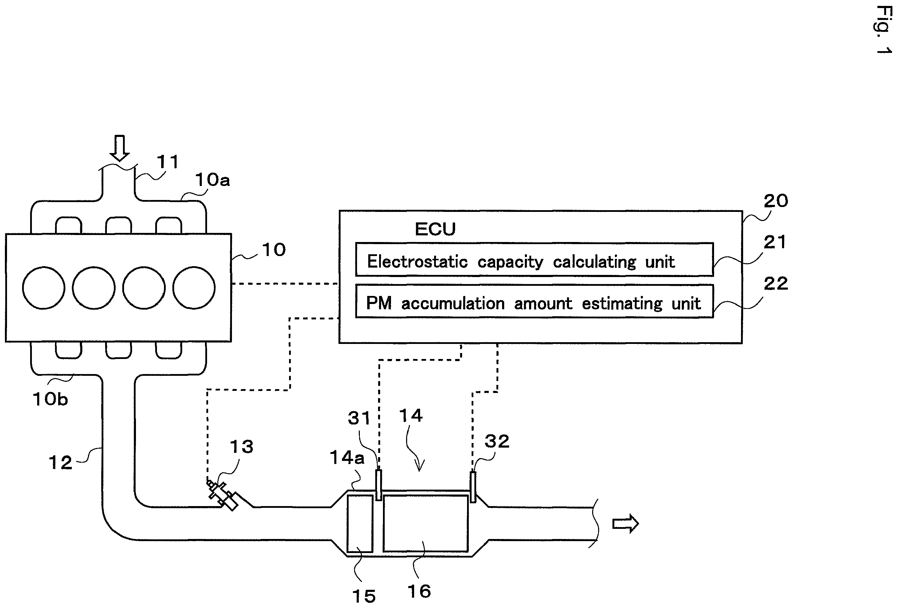

Hereinafter, with reference to Figs. 1 to 4, a device for measuring particulate matter according to an embodiment of the present invention will be described. Identical parts are given identical reference numerals and symbols, and their names and functions are identical as well. Therefore, detailed descriptions of such parts will not be repeated.

As illustrated in Fig. 1, a diesel engine (hereinafter simply referred to as "engine") 10 has an intake manifold 10a and an exhaust manifold 10b. An intake passage 11 for introducing fresh air is connected to the intake manifold 10a, and an exhaust passage 12 for discharging an exhaust gas to the atmosphere is connected to the exhaust manifold 10b.

An in-pipe injection device 13, an exhaust gas post-treatment device 14, a DPF inlet temperature sensor 31, and a DPF outlet temperature sensor 32 are provided in the exhaust passage 12. The in-pipe injection device 13 is arranged upstream of the exhaust gas post-treatment device 14. The exhaust gas post-treatment device 14 is arranged upstream of the DPF inlet temperature sensor 31. The DPF inlet temperature sensor 31 is arranged upstream of the DPF outlet temperature sensor 32.

The in-pipe injection device 13 injects unburned fuel (primarily HC) into the exhaust passage 12, in response to an instruction signal from an electronic control unit (hereinafter referred to as "ECU") 20. The in-pipe injection device 13 may be omitted if post-injection through multiple-injection of the engine 10 is carried out.

The DPF inlet temperature sensor 31 detects the temperature of the exhaust gas flowing into a DPF 16 (hereinafter referred to as "inlet temperature $T_{IN}$"). The DPF outlet temperature sensor 32 detects the temperature of the exhaust gas flowing out of the DPF 16 (hereinafter referred to as "outlet temperature $T_{OUT}$"). The inlet temperature $T_{IN}$ and the outlet temperature $T_{OUT}$ are introduced to the ECU 20, which is electrically connected to the DPF inlet temperature sensor 31 and the DPF outlet temperature sensor 32.

The exhaust gas post-treatment device 14 is constituted by an oxidation catalyst 15 and the DPF 16 disposed inside a casing 14a. The oxidation catalyst 15 is arranged upstream of the DPF 16.

The oxidation catalyst 15 includes, for example, a ceramic carrier having a cordierite honeycomb structure, with a catalyst component supported on a surface of the ceramic carrier. When forced regeneration of the DPF 16 is carried out, the oxidation catalyst 15 oxidizes the unburned fuel (primarily HC) upon the unburned fuel being supplied by the in-pipe injection device 13 or through post-injection, thereby causing the exhaust gas temperature to rise. Thus, the temperature of the DPF 16 is raised to the PM-burning temperature (e.g., approximately 600 degrees C), and the accumulated PM is burned and removed.

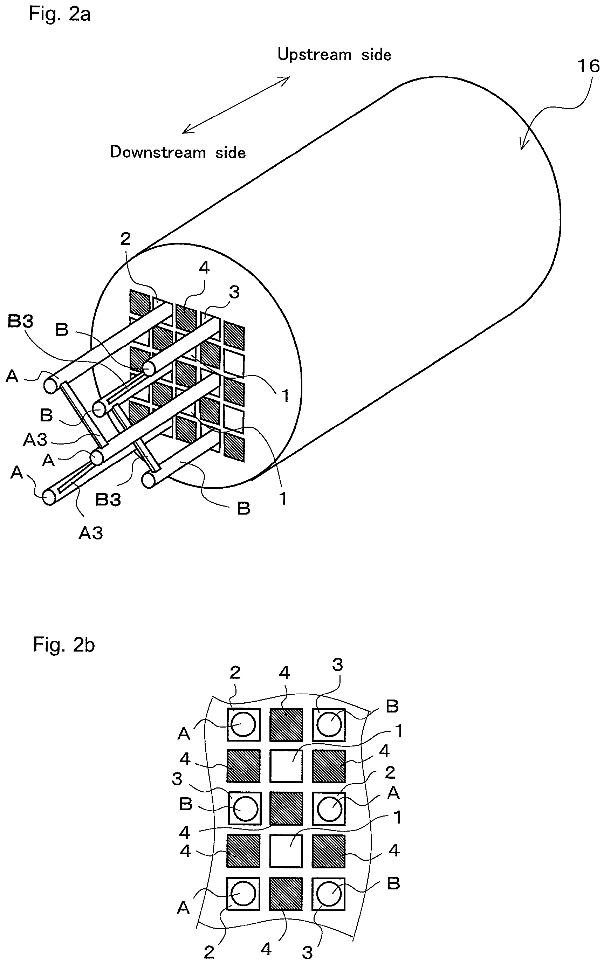

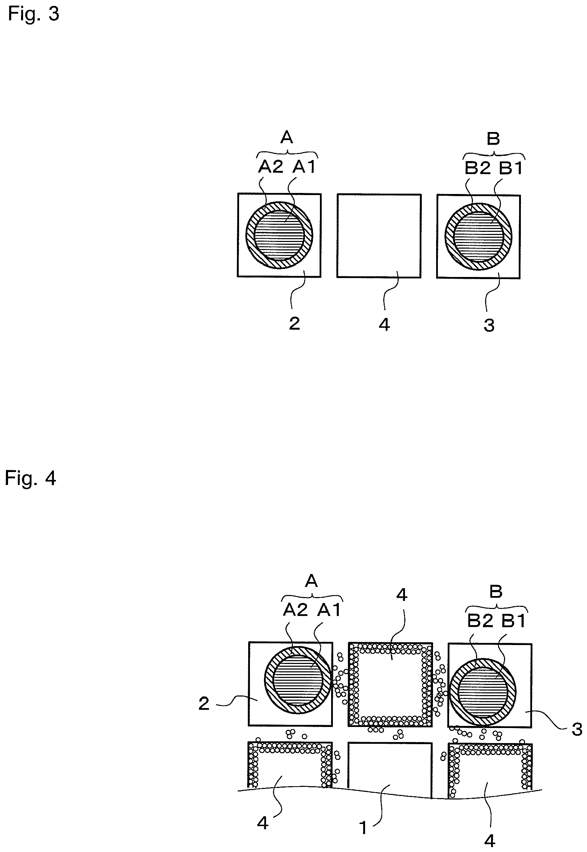

The DPF 16 includes a number of cells arranged along the flowing direction of the exhaust gas. The cells form lattice-patterned exhaust flow channels defined by partition walls. The partition walls are made from porous ceramics. The cells are plugged alternatingly at their upstream sides (upstream ends) and their downstream sides (downstream ends). Referring to Figs. 2a, 2b and 3, the detailed structure of the DPF 16 of this embodiment will be described.

As illustrated in Figs. 2a and 2b, a plurality of cells 1 that are plugged at the upstream side of the exhaust passage are selected as center cells in the DPF 16. A pair of cells 2 are disposed diagonally across each of the center cells 1, and first electrodes A are received in the respective cells 2 (hereinafter, the cells 2 are referred to as "first-electrode cells"). Another pair of cells 3 are disposed diagonally across each of the center cells 1, and second electrodes B are received in the respective cells 3 (hereinafter, the cells 3 are referred to as second-electrode cells). Four cells 4 that are adjacent to the partition walls of the center cell 1 concerned, and that are each interposed between the associated first-electrode cell 2 and the associated second-electrode cell 3 are selected as cells for measuring an electrostatic capacity (hereinafter, the cells 4 are referred to as "measurement cells").

As shown in Fig. 3, the first electrode A and the second electrode B include wire cores A1 and B1 made from a conductive metal material and insulating layers A2 and B2 made from an insulating ceramic material or glass material, and the insulating layers A2 and B2 cover the outer peripheries of the wire cores A1 and B1. Thus, even if the electrodes A and B bend in the cells 2 and 3 and at least partially come into contact with the surfaces of the partition walls, the insulating layers A2 and B2 are present between the partition walls and the wire cores A1 and B1. Accordingly, even if conductive PM accumulates in a substantially rectangular shape on the surfaces of the partition walls of the measurement cell 4 and some of the conductive PM is also collected into the partition walls, short-circuiting between the first electrode A and the second electrode B can reliably be prevented.

The first electrodes A received in the first-electrode cells 2 have their end portions protruding outward on the downstream side of the exhaust passage, and these end portions are connected to each other by a first connecting member A3 (see Fig. 2a) made from a conductive metal wire. In a similar manner, the second electrodes B received in the second-electrode cells 3 have their downstream end portions protruding outward on the downstream side of the exhaust passage, and these end portions are connected to each other by a second connecting member B3 (see Fig. 2a) made from a conductive metal wire.

In this embodiment, a protruding amount (length) of the first electrode A is greater than a protruding amount (length) of the second electrode B in order to prevent the first connecting member A3 and the second connecting member B3 from coming into contact with each other. It should be noted, however, that the protruding amount of the first electrode A need not be greater than the second electrode B, i.e., the protruding length of the second electrode B may be greater than the protruding length of the first electrode A.

Referring back to Fig. 1, the ECU 20 of this embodiment will be described. The ECU 20 controls fuel injection and other operations of the engine 10 and the in-pipe injection device 13, and includes a known CPU, ROM, RAM, input port, output port, and so on. The ECU 20 includes, as part of its functional elements, an electrostatic capacity calculating unit 21 and a PM accumulation amount estimating unit 22. The description continues with a premise that these functional elements are included in the ECU 20, which is an integrated piece of hardware, but some of these functional elements can be provided in a separate piece of hardware.

The electrostatic capacity calculating unit 21 calculates an electrostatic capacity (capacity) C between the first electrode A and the second electrode B on the basis of signals from the first electrode A and the second electrode B. The electrostatic capacity C is calculated by the following Expression 1, where $\varepsilon$ represents a dielectric constant of a medium between the electrodes A and B, S represents the area of the electrodes A and B, and d represents the distance between the electrodes A and B.

### Expression 1

$$C = \varepsilon \times \frac{S}{d}$$

The PM accumulation amount estimating unit 22 estimates the amount $PM_{DEP}$ of accumulated PM collected by the DPF 16, on the basis of the electrostatic capacity C calculated by the electrostatic capacity calculating unit 21 and an average of the inlet temperature $T_{IN}$ detected by the DPF inlet temperature sensor 31 and the outlet temperature $T_{OUT}$ detected by the DPF outlet temperature sensor 32 (hereinafter referred to as "DPF average temperature $T_{AVE}$"). The amount $PM_{DEP}$ of accumulated PM can be estimated by using an approximation formula, a map, or the like obtained or prepared in advance through an experiment.

Operations and advantages of the particulate matter measuring device of this embodiment will now be described.

A conventional PM sensor is difficult to retain the linearity of electrodes disposed in cells. Thus, the electrodes partially come into contact with the surfaces of the partition walls of the cells. Because the electrodes are made only from a conductive metal material, there is a possibility that when conductive PM accumulates in a substantially rectangular shape on the surfaces of the partition walls of a measurement cell and some of the conductive PM is also collected in the partition walls, a pair of electrodes are coupled to each other through the conductive PM (see Fig. 6) and a short circuit is established between the electrodes.

On the contrary, in the particulate matter measuring device according to this embodiment, the first electrode A and the second electrode B include the conductive wire cores A1 and B1 with their outer peripheries being covered with the insulating layers A2 and B2. Thus, as illustrated in Fig. 4, even if the conductive PM accumulates in a substantially rectangular shape on the surfaces of the partition walls of the measurement cell and is also collected in the partition walls, the wire core A1 of the first electrode A and the wire core B1 of the second electrode B are reliably prevented from coupling to each other by the insulating layers A2 and B2 interposed therebetween.

Therefore, the particulate matter measuring device of this embodiment can reliably prevent short-circuiting between the first electrode A and the second electrode B that would otherwise occur due to PM accumulation. In particular, when the DPF 16 has a catalyst supported therein, the insulating layers A2 and B2 also function as protective layers, and thus corrosion of the first electrode A and the second electrode B can effectively be suppressed.

In the conventional PM sensor, one capacitor is only formed by a pair of electrodes disposed with a single cell interposed therebetween (e.g., only two capacitors are formed by two electrodes A and two electrodes B). Therefore, in order to increase the number of measurement cells, the number of electrodes needs to be increased, and problems arise, i.e., the fabrication cost increases, and the PM collection performance of the DPF drops due to an increase in the number of electrode cells.

On the contrary, in the particulate matter measuring device of this embodiment, the two first electrodes A are disposed in the corresponding pair of cells 2 located diagonally across the center cell 1, the two second electrodes B are disposed in the corresponding pair of cells 3 located diagonally across the center cell 1, and four capacitors are formed between the two first electrodes A and the two second electrodes B. In other words, four cells located diagonally across the center cell 1 serve as the measurement cells for measuring the electrostatic capacity.

Therefore, according to the particulate matter measuring device of this embodiment, a large number of capacitors can be formed effectively without significantly increasing the number of the electrodes A and B, and an increase in the fabrication cost and a decrease in the PM collecting capability of the DPF can effectively be suppressed.

It is to be noted that the present invention is not limited to the above-described embodiment, and can be implemented with changes and modifications, as appropriate, within the scope that does not depart from the spirit of the present invention.

For example, although the DPF 16 is disposed in the exhaust passage 12 with the unplugged side of the measurement cells 4 facing toward the upstream side of the exhaust passage in the foregoing description, the DPF 16 may be disposed with the plugged side of the measurement cells 4 facing toward the upstream side of the exhaust passage.

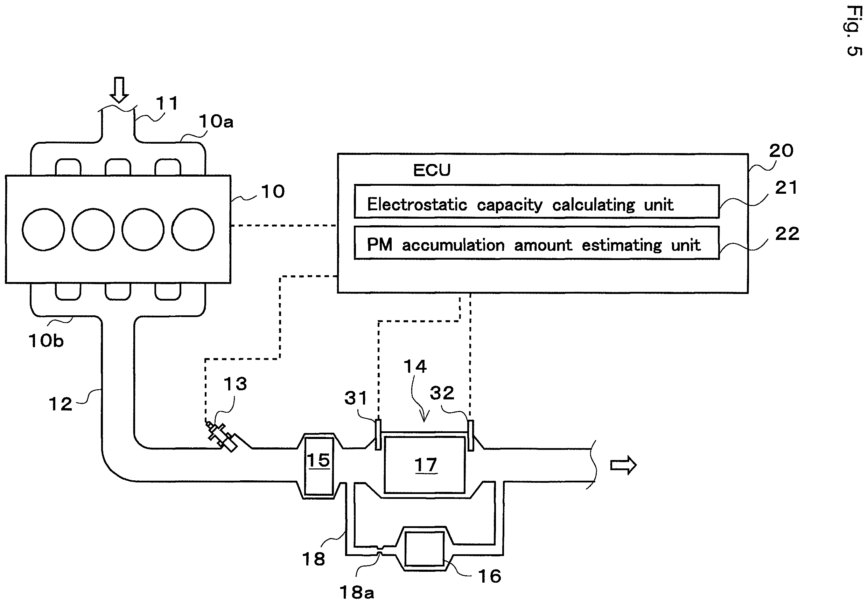

As illustrated in Fig. 5, a bypass passage 18 that branches off from the exhaust passage 12 at a position downstream of the oxidation catalyst 15 may be provided, and a measurement DPF 16 having a reduced capacity may be disposed in the bypass passage 18. In this case, it is preferred that a DPF 17 (second filter) having a large capacity be provided in the exhaust passage 12 downstream of the branching portion, and an orifice 18a for adjusting the flow rate of the exhaust gas be provided in the bypass passage 18. When forced regeneration of the measurement DPF 16 is executed, the electrodes A and B may function as a heater by applying a voltage across the electrodes A and B.

REFERENCE NUMERALS AND SYMBOLS

| 1: | Center cell |
|---|---|
| 2: | First-electrode cell (first diagonal cell) |
| 3: | Second-electrode cell (second diagonal cell) |
| 4: | Measurement cell |
| 10: | Engine |
| 12: | Exhaust passage |
| 14: | Exhaust gas post-treatment device |
| 16: | DPF (filter) |
| 20: | ECU |
| 21: | Electrostatic capacity calculating unit (accumulation amount calculating unit) |
| 22: | PM accumulation amount estimating unit (accumulation amount calculating unit) |
| A: | First electrode |
| B: | Second electrode |
| A1, B1: | Wire cores |
| A2, B2: | Insulating layers |
| A3: | First connecting member |
| B3: | Second connecting member |

**Claims**

1. A device for measuring particulate matter, comprising:

a filter (16) that is provided in an exhaust passage (12) of an internal combustion engine (10) and that includes a plurality of cells (1, 2, 3, 4) forming lattice-patterned exhaust flow channels defined by porous partition walls, the cells (1, 2, 3, 4) being plugged alternatingly at an upstream side and a downstream side;
electrodes (A, B), which are received from unplugged sides of said corresponding pair of cells (1, 2, 3, 4) and
accumulation amount calculating means (21, 22) configured to calculate an amount of accumulated particulate matter collected by the filter (16), based on an electrostatic capacity between the pair of electrodes (A, B),
the device being **characterized in that**, each of the electrodes (A,B) includes a conductive wire core (A1, B1) covered with an insulating layer (A2, B2),
one of the cells is designated as a center cell (1), four measurement cells (4) are disposed adjacent to the four respective partition walls of the center cell (1), and four electrodes (A, B) are disposed in the four respective cells located diagonally across the center cell (1), and the device for measuring particulate matter further includes:

a first conducting connecting member (A3) configured to connect a pair of diagonally disposed electrodes (A) to each other; and a second conducting connecting member (B3) configured to connect another pair of diagonally disposed electrodes (B) to each other.

2. The device for measuring particulate matter according to claim 1, wherein the insulating layer (A2, B2) is made from a ceramic material or a glass material.

3. The device for measuring particulate matter according to claim 1 or 2, wherein the filter (16) is disposed in the exhaust passage (12) with an unplugged side of the measurement cell (4) facing toward the upstream side.

**Patentansprüche**

1. Vorrichtung zum Messen von Partikularstoff, umfassend:

einen ersten Filter (16), der in einem Abgaskanal (12) eines Verbrennungsmotors (10) vorgesehen ist und der eine Vielzahl von Zellen (1, 2, 3, 4) enthält, die ein gitterartiges Muster von Abgasströmungskanälen bilden, die von porösen Trennwänden begrenzt sind, wobei die Zellen (1, 2, 3, 4) an einer stromaufwärts gelegenen Seite und einer stromabwärts gelegenen Seite abwechselnd verschlossen sind; Elektroden (A, B), die von unverschlossenen Seiten des entsprechenden Paars Zellen (1, 2, 3, 4) aufgenommen sind; und Ansammlungsmengen-Rechenmittel (21, 22), die ausgebildet sind, eine Menge an angesammeltem Partikularstoff, der von dem Filter (16) gesammelt ist, auf Grundlage einer elektrostatischen Kapazität zwischen dem Paar Elektroden (A, B) zu berechnen, wobei die Vorrichtung **dadurch gekennzeichnet ist, dass** jede der Elektroden (A, B) einen leitenden Drahtkern (A1, B1) enthält, der mit einer isolierenden Schicht (A2, B2) bedeckt ist, eine der Zellen als mittige Zelle (1) bezeichnet wird, vier Messzellen (4) angrenzend an die vier jeweiligen Trennwände der mittigen Zelle (1) angeordnet sind, und vier Elektroden (A, B) in den vier jeweiligen Zellen angeordnet sind, die diagonal über die mittige Zelle (1) angeordnet sind, und die Vorrichtung zum Messen von Partikularstoff ferner enthält:

ein erstes leitendes Verbindungselement (A3), das ausgebildet ist, ein Paar diagonal angeordneter Elektroden (A) miteinander zu verbinden; und ein zweites leitendes Verbindungselement (B3), das ausgebildet ist, ein anderes Paar diagonal angeordneter Elektroden (B) miteinander zu verbinden.

2. Vorrichtung zum Messen von Partikularstoff nach Anspruch 1, wobei die isolierende Schicht (A2, B2) aus einem keramischen Material oder einem Glasmaterial gefertigt ist.

3. Vorrichtung zum Messen von Partikularstoff nach Anspruch 1 oder 2, wobei der Filter (16) in dem Abgaskanal (12) derart angeordnet ist, dass eine unverschlossene Seite der Messzelle (4) in Richtung der stromaufwärts gelegenen Seite gerichtet ist.

**Revendications**

1. Dispositif de mesure de particules comprenant :

un filtre (16) disposé dans un passage d'échappement (12) d'un moteur à combustion interne (10) et qui comporte une pluralité de cellules (1, 2, 3, 4) qui forment des canaux d'écoulement d'échappement à motif en treillis définis par des parois de séparation poreuses, les cellules (1, 2, 3, 4) étant obstruées alternativement d'un côté amont et d'un côté aval ; des électrodes (A, B) qui sont reçues à partir des côtés non obstrués de ladite paire de cellules (1, 2, 3, 4) correspondante ; et des moyens de calcul de quantité d'accumulation (21, 22) configurés pour calculer une quantité de particules accumulées collectées par le filtre (16), en se fondant sur une capacité électrostatique entre la paire d'électrodes (A, B), le dispositif étant **caractérisé en ce que** chacune des électrodes (A, B) comporte un noyau de fil conducteur (A1, B1) recouvert d'une couche isolante (A2, B2), l'une des cellules est désignée comme étant une cellule centrale (1), quatre cellules de mesure (4) sont disposées de manière à être adjacentes aux quatre parois de séparation respectives de la cellule centrale (1), et quatre électrodes (A, B) sont disposées dans les quatre cellules respectives placées en diagonale à travers la cellule centrale (1), et le dispositif de mesure des particules comportant en outre :

un premier élément de connexion conducteur (A3) configuré pour connecter une paire d'électrodes (A) disposées en diagonale les unes par rapport aux autres ; et un second élément de connexion conducteur (B3) configuré pour connecter une autre paire d'électrodes (B) disposées en diagonale les unes par rapport aux autres.

2. Dispositif de mesure de particules selon la revendication 1, dans lequel la couche isolante (A2, B2) est constituée de matériau de céramique ou de verre.

3. Dispositif de mesure de particules selon la revendication 1 ou 2, dans lequel le filtre (16) est disposé dans le passage d'échappement (12) avec un côté non obstrué de la cellule de mesure (4) qui est tourné vers le côté amont.

Fig. 1

## Fig. 2a

## Fig. 2b

Fig. 3

Fig. 4

Fig. 5

Fig. 6

## REFERENCES CITED IN THE DESCRIPTION

**Patent documents cited in the description**

- JP 2012241643 A
- US 2008229931 A1
- US 2011225954 A1
- US 2008105567 A1